# EUROPEAN PATENT APPLICATION

(11) **EP 2 211 325 A1**
(43) Date of publication of application: **28.07.2010**
(21) Application number: 09151121.2
(22) Date of filing: 22.01.2009
(51) Int. Cl.: G09B 21/00

(54) **Method and apparatus for braille input on portable electronic device**

(71) Applicant: RESEARCH IN MOTION LIMITED, Waterloo, Ontario N2L 3W8 (CA)
(72) Inventor: Fields, Gregory, Waterloo, Ontario N2L 3W8 (CA); Khan, Gabriel Deen, Waterloo, Ontario N2L 3W8 (CA)
(74) Representative: Roberts, Gwilym Vaughan

(57) **Abstract**

An apparatus (310) for remapping an existing keyboard (216)on a portable electronic device (210) for use by visually impaired users. The apparatus (310) includes an overlay for an existing keyboard (216) of the portable electronic device (210). The overlay (310) may be configured to provide one or more Braille keypads (320, 322) located above input keys (216) on an existing keyboard of the device such that when a key in the Braille keypad sections (320a-f, 322a-f) is pressed, the pressed key (320a-f, 322a-f) contacts and presses one or more input keys (216) located below the pressed Braille key (320a-f, 322a-f). Remapping software or hardware (238, 896) is included for remapping the depressed input keys (216) to a corresponding alpha-numeric character on the device (210).

## Description

### RESERVATION OF COPYRIGHT

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

### FIELD OF THE INVENTION

Embodiments relate generally to Braille character input for portable electronic devices and related methods and apparatuses disclosed herein.

### BACKGROUND OF THE INVENTION

Portable electronic devices such as mobile telephones or personal digital assistants (PDAs) generally include a keypad for user input. In many cases, the keypad is a set of physical keys or buttons that a user may push in order to make user selections. In some cases, the keypad is a virtual keypad displayed on a touch screen. In either case, the portable electronic device is used by a user who must identify the desired key or button to push. Identification of the desired keys is usually facilitated by the use of visual symbols associated with each key. An example of such identification is a conventional keypad on a landline or mobile telephone. On a telephone, the keys on the keypad are identified by the numbers 0-9. The keys may also be identified by other symbols such as letters of the alphabet. Special characters such as punctuation, currency, or mathematic symbols may also be associated with the keys.

The visual symbols associated with the keys of the portable electronic device are available so that a user may visually identify which key to touch for a corresponding desired action. In the case of a telephone, the user may use the visual symbols to identify which keys to touch in order to enter and dial a telephone number. As another example, the user may use the visual symbols to identify which alpha-numeric and punctuation keys to press/touch in order to input a text message or email. Generally, once a user presses a key, the corresponding numeric or alpha-character is displayed on a screen of the portable electronic device.

Complications arise, however, for users who are blind or who cannot see the portable electronic device very well. For individuals who cannot see the visual symbols associated with each key, the symbols are not helpful and do not allow the individual user to independently identify which button to touch. Although some solutions to this problem have been proposed, there remains a need for an apparatus and related methods that allow visually-impaired users to independently input numbers, text and other characters on a portable electronic device. Some previously proposed solutions are described below.

U.S. Patent Application Publication No. 2008/0020356 to Saba represents one previous effort in this area. The Saba application discloses a sticker-like Braille overlay member for use with a cellular telephone. The Braille overlay member includes a Braille embossed section. The overlay member also includes a back surface having an adhesive layer, Using the adhesive layer, the Braille overlay member is adhered to a keypad of a cellular telephone. The Braille-embossed section includes a plurality of number keys in Braille code representing the conventional number keys on the conventional cellular telephone keypad. The Braille-embossed section also includes a plurality of special function keys in Braille code representing the conventional special function keys on the cellular telephone keypad. Each number key and special function key includes one or more embossed and raised dots representing the corresponding numbers and letters in the Braille code. The keys correspond in a one-to-one (1:1) manner with the keys of the underlying cellular telephone so that when a user pushes a key of the overlay member, the corresponding number key on the telephone is also pushed. In this way, a user can identify the Braille character associated with each key and then dial a telephone number accordingly.

Other solutions include Braille skins that, like the Saba overlay member, overlay the keys of the device keypad with a Braille-embossed skin. Braille stick-on labels have also been proposed. Another alternative provides an overlaying Braille-embossed 1:1 keyboard on top of the device keypad or touch screen. In each of these instances, however, the keys of the device (whether actual keys or keys on a touch screen) maintain their same function. The skin, overlay, stickers or overlaying keyboard simply provide another method of identifying the function of the device keys.

Another approach provides portable devices that are specifically designed for visually-impaired users, In other words, these devices may include, as a default, a Braille keypad or additional keys for visually-impaired use. The portable device may be compatible with various external keyboards that may include Braille keyboards and that communicate with the portable device. Such devices, however, are limited because of their bulk and because only a small percentage of users require a Braille-specific portable electronic device. The market for Braille-specific devices is, therefore, also limited.

Due to the disadvantages of previous attempts to provide a Braille-friendly portable electronic device, there remains a clear need for an improved portable electronic device and associated methods that allow a user of a portable electronic device to input Braille characters.

### SUMMARY OF THE INVENTION

Specific embodiments and applications related to the below description include, but are not limited to, a method for Braille character input on a potable electronic device. The method comprises receiving a set of electronic signals from activated input keys on a keyboard of the portable electronic device; mapping the received signals to a corresponding Braille character based on positional relationships of the activated input keys; and registering an alpha-numeric character corresponding to the mapped Braille character on the portable electronic device. The method optionally includes producing an audible representation of each mapped alpha-numeric character detected. The method can also include determining whether the corresponding Braille character is an alphabet or numeric Braille character by identifying which of a plurality of sets of input keys on the keyboard have been activated. In one embodiment, the method includes a step of determining whether the portable electronic device is in a Braille-input mode before mapping the received signals to a corresponding Braille character.

An additional embodiment includes an apparatus for remapping an existing keyboard on a portable electronic device for use by visually impaired users. The apparatus includes at least one overlay for the portable electronic device. The overlay attaches to a portable electronic device such that two Braille keypad sections are located above input keys on the existing keyboard of the device, one for alpha characters and the other for numeric characters. When keys in the Braille keypad sections are pressed, the pressed keys also contact and press the input keys located directly below the pressed Braille keys. The device is adapted to interpret the signals from the pressed input keys to render the corresponding alpha-numeric character on a display of the device. The overlay may also include at least one function key located above one or more input keys on the existing keyboard.

A system for remapping an existing keyboard on a portable electronic device for use by visually impaired users is also described. The system includes at least one portable electronic device haying a keyboard and an overlay for that keyboard. The overlay may provide one or more Braille keypads located above input keys on an existing keyboard of the device. The system includes remapping software for remapping one or more keys pressed on the overlay that contact input keys located on the device keyboard directly below the pressed Braille keys. The system determines which corresponding alpha-numeric character has been entered on the device using software running on the portable electronic device.

Another embodiment includes a system for remapping an existing keyboard on a portable electronic device by inclusion of a hardware remapping circuit to determine which corresponding alpha-numeric character has been entered on the overlay. The hardware remapping circuit may have a key map hard wired into circuitry or optionally include a memory for storing a key map, which may be a lookup table or a database.

Another disclosed embodiment provides a portable electronic device having a portable housing, a display mounted on the portable housing and a keyboard. The device also includes a speaker. The device includes a Braille overlay for the device keyboard and a remapping means for remapping keys pressed on the overlayed keyboard to determine which corresponding alpha-ntimeric character has been entered on the device. The means may be implemented by software running on the portable electronic device, or by a hardware circuit and the means may optionally use a key map that is one of a lookup table or a database. The device also optionally includes software for producing an audible representation of each mapped key pressed.

### BRIEF DESCRIPTION OF THE DRAWINGS

FIG. 1 illustrates a portable electronic device for communicating with a network in accordance with an embodiment disclosed herein.
FIG. 2 illustrates how the portable electronic device establishes a connection with a network in accordance with an embodiment disclosed herein.
FIGs. 3A-3B illustrate example Braille overlays implemented according to an embodiment disclosed herein.
FIG. 4 is an example Braille alphabet to be used with any of the embodiments disclosed herein.

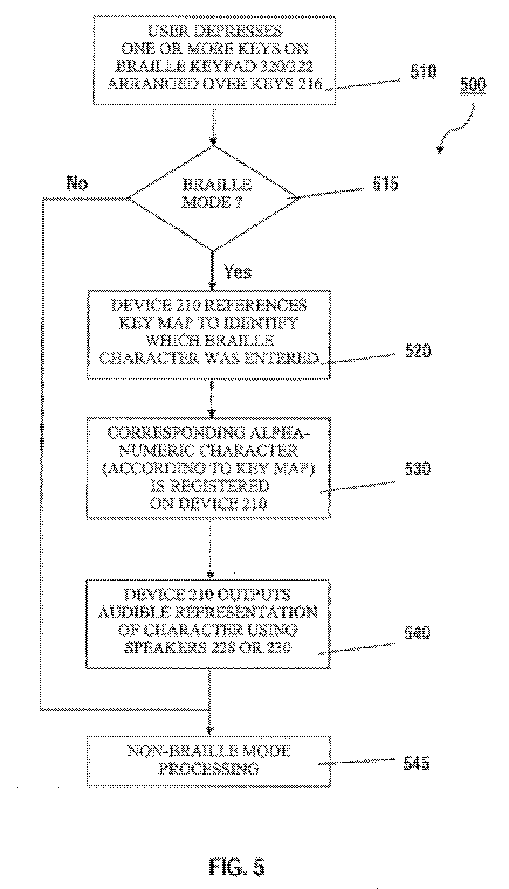

FIG. 5 is a flowchart of an example process for translating input Braille characters according to an embodiment disclosed herein.
FIG. 6 is a block diagram of an example portable electronic device constructed in accordance with an embodiment disclosed herein.

### DETAILED DESCRIPTION OF THE INVENTION

Example embodiments and applications will now be described. It should be appreciated that other embodiments may be realized and structural of logical changes may be made to the disclosed embodiments.

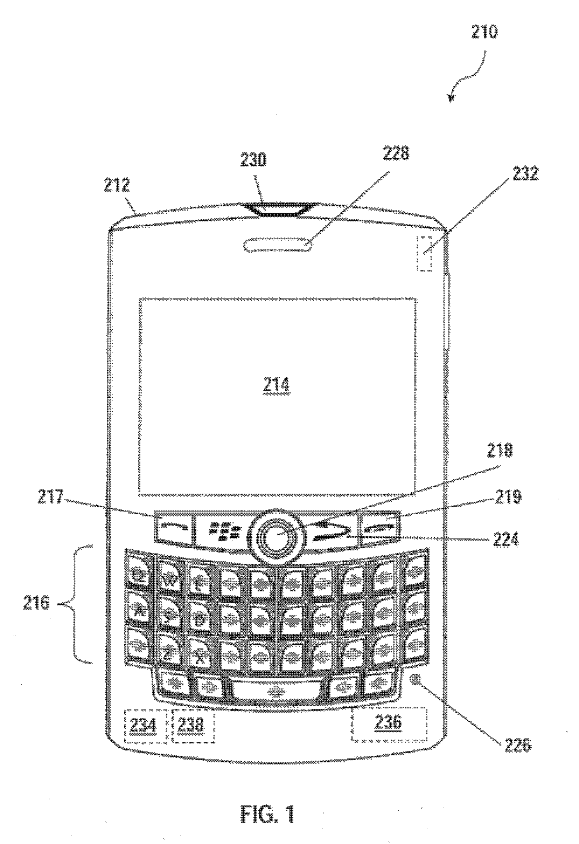

FIG. 1 illustrate a portable electronic device 210 according to a disclosed embodiment. The portable electronic device 210 may be a dual mode (simultaneous data and voice communication capabilities) or single mode communication device, personal digital assistant, etc. Such devices include Blackberry^{™} devices by Research in Motion Limited of Ontario, Canada, or Palm^{®} Treo^{™} devices by Palm, Inc. of California, U.S.A. to name a few. In addition, the portable electronic device 210 may be a cellular telephone. The device 210 includes a portable housing 212, a display 214 and a keyboard of input keys 216. The device 210 also include a depressible trackball 218 and a level up or back button 224. The depressible trackball 218 and level up button 224 are used by a user to navigate through menus and files visualized on the display 214. The level up button 224 allows a user to visualize a next higher menu or option screen. Alternatively, a depressible thumb navigator (e.g., a thumb wheel) and a side-mounted level up button may be used to navigate through visualized menus and files. Desired menu options or files are selected by depressing the trackball 218 or the thumb navigator. The input keys 216 are used to enter information such as text, numbers or symbols to create or modify a file, to dial a telephone number, etc.; the input information being visualized on the display 214. The user can also use call answer key 217 and call end key 219 to start and end telephone calls.

The device 210 also includes a transceiver 232 for receiving and transmitting data. Received data includes e.g., files viewable on the display 214. Device 210 is also capable of using transceiver 232 to facilitate voice communication using microphone 226 and at least one of an internal speaker 228 or an external speaker 230 (*e.g*., in a speakerphone mode). Data to be transmitted includes *e.g*., data input into the device 210 using the input keys 216. The device 210 includes a battery 234 to supply power to internal circuitry, the display 214 and for generating electrical signals in response to operation of the input keys 216, the trackball 218 and the transceiver 232. A remapping circuit 238, described below, may be optionally included in the device 210.

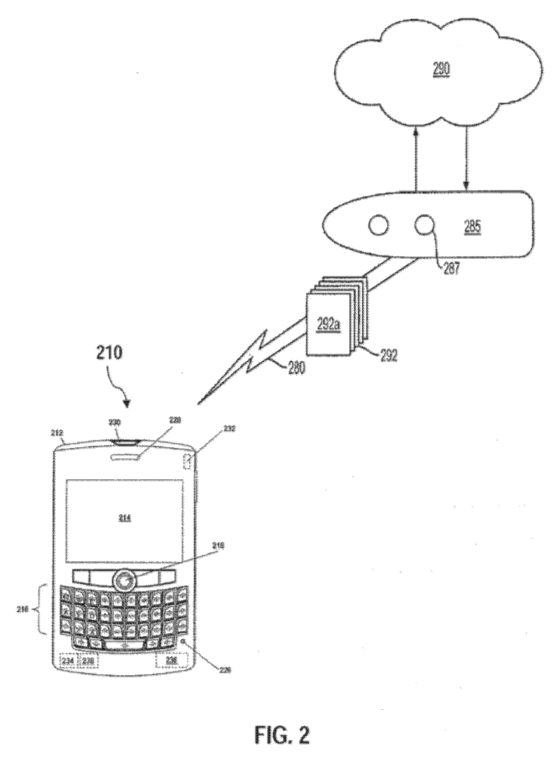

The portable electronic device 210 is configured to establish a connection 280 with a network 290, as illustrated in FIG. 2. The network 290 may be a private or public network (e.g., the Internet). The connection 280 with the network 290 is preferably wireless, and thus utilizes at least one of a plurality of nodes 287, such as a base station, within a wireless network 285. Data 292 is uploaded from and downloaded to the device 210 from the network 290 via the wireless network nodes 287. The data 292 may include files 292a comprising any type of data, including but not limited to text, emails, web pages, word processing documents, spreadsheets and image files. The data 292 is capable of being presented to the user visually through rendering on the display 214 or audibly through the internal speaker 228 or the external speaker 230.

A rendering circuit 236 is included in the device 210. When a user specifies that data 292 is to be viewed on the display 214, the rendering circuit 236 analyzes and processes the file 292a for visualization on the display 214. The rendering circuit 236 may be implemented as hardware, software, or as a combination of both hardware and software.

According to a disclosed embodiment, the portable electronic device 210 10 can be operated in both a Braille-input mode and a non-Braille-input mode. In the non-Braille-input mode, a user can use the device's input keys to input text, numbers and symbols into the device 210. In the non-Braille-input mode, the input keys are used to input characters that are indicated by the physical visual indicators on or near the input keys. Some input keys may correspond to multiple characters (e.g., a letter, a number, and/or a symbol). In a case where an input key corresponds to more than one character, the user may need to indicate which character is desired. This may require the use of a shift or function key touched in combination with the desired input key.

Alternatively, the user may use a specific input key or may use the thumb navigator or trackball to select a default setting indicating the type of character each input key normally generates. For example, if an input key can be used to enter either a number or a letter and the default setting for the input key is to input a letter, a user desiring to use the input key to input a number could either first depress a shift or function key and then depress the input key, or the user may change the default setting so that the new default setting for the input key is to generate a number instead of a letter. In either event, the user is able to input any of the characters that correspond to the input key by using the visual indicators associated with the input key.

For users who prefer to input characters using the Braille language a Braille-input mode is available and can be selected by using either the trackball or thumb navigator. Once selected, the device 210 operates and remains in the Braille-input mode until the mode is again changed by a user. Although the above description distinguishes between Braille and non-Braille input modes, it is contemplated that the device can be programmed to operate natively in Braille as an input language.

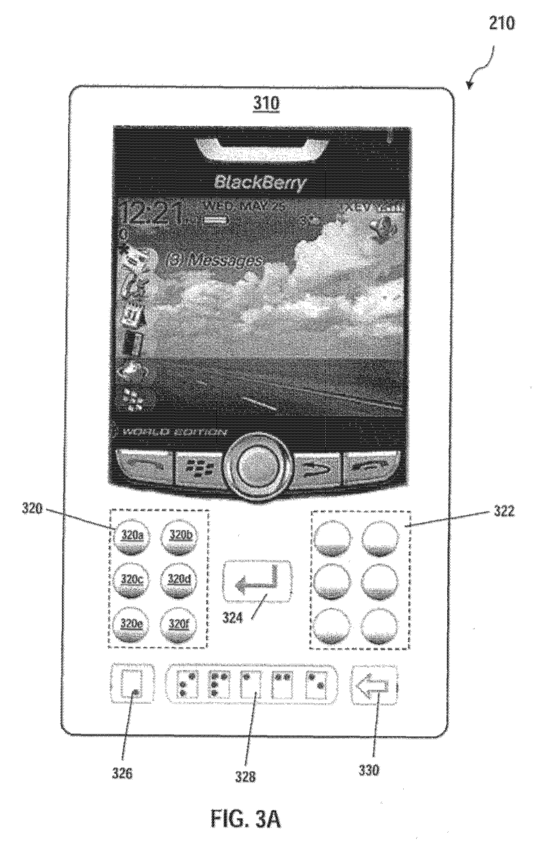

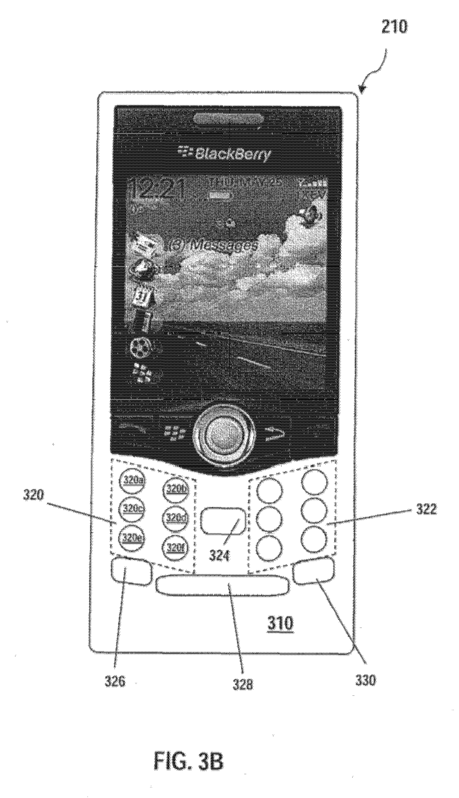

Referring to FIGs. 3A and 3B, when operating the device 210 in the Braille-input mode, an overlay 310 is preferably attached to the device 210. FIG. 3A illustrates an example embodiment of an overlay 310 for a device 210 having a QWFRTY keyboard. FIG. 3B illustrates an example embodiment of an overlay 310 for a devise 210 having a SureType® keyboard. A SureType® keyboard is one of several non-traditional keyboard layouts (such as a 4x5 layout) integrating predictive text functionality to reduce the number of keys on the keyboard of the device. Such technology is described in more detail in U.S. Publication No. 2006/0181435 A1, hereby incorporated by reference in its entirety. Although not depicted, a device 210 having a SurePress or capacitive touch screen (such as the Blackberry 9500-scries) can also operate in Braille-input mode using an overlay 310 designed for that device. The overlay 310 can be formed of polyvinyl chloride (PVC), neoprene, silicone, or any other suitable protective material.

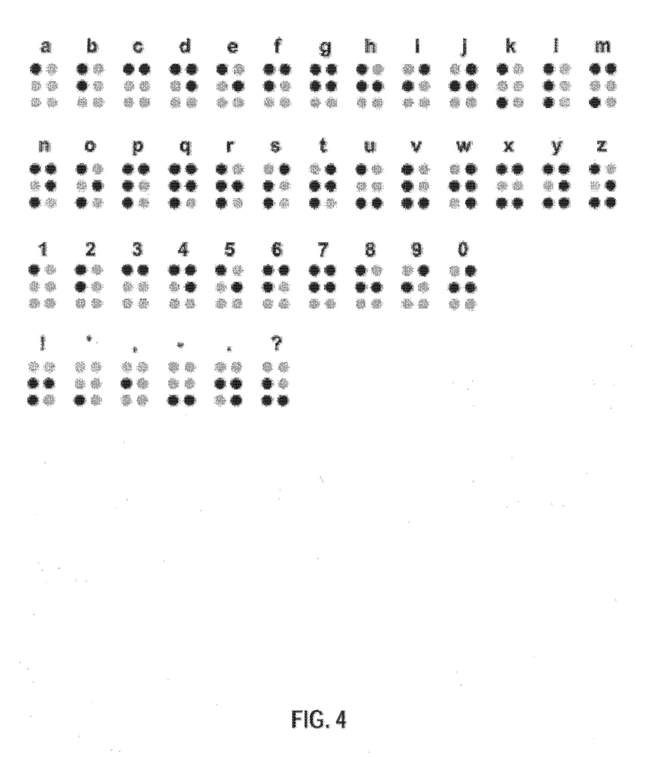

Overlay 310 includes two Braille keypad sections 320, 322. The Braille keypad sections 320, 322 each include six input keys (ex. 320a-320f), The six input keys in each section are arranged in a 3-by-2 array. The six keys in each section are depressed in various configurations in order to represent corresponding Braille characters, For example, and with reference to the example Braille alphabet illustrated in FIG. 4, a user may use one of the Braille keypad sections to input the letter "A." The alphabet in FIG. 4 indicates that the letter "A," in Braille, can be represented by depressing the top-left key 320a of Braille keypad section 320. The letter "B" can be represented by depressing both the top-left key 320a and the middle-left key 320c of Braille keypad section 320. Other letters and symbols can be represented according to the example Braille alphabet of FIG.4.

The second Braille keypad section 322 can be used to represent numbers and other symbols. In this way, by having two separate Braille keypad sections, 320, 322, each section can be dedicated for use with certain characters (e.g., letters, numbers, or symbols). This has the advantage that the user, in Braille-input mode, does not need to shift the input keys between a number-input setting and a letter-input setting, since both input settings are already available at all times using the two separate Braille keypad sections 320,322. Overlay 310 may optionally include additional function keys which operate as an ENTER key 324, CAP key 326, SPACE bar 328, and BACKSPACE key 330. In an alternative embodiment, the 16-key layout of keypad sections 320, 322 and function keys 324, 326, 328 and 330 depicted in FIG. 3A could replace the keyboard of the device itself.

The overlay attaches to the device 210 such that the Braille keypad sections 320, 322 and function keys 324-330 are each positioned above one or more input keys 216 of the device 210. When keys in the Braille keypad sections 320, 322 are depressed, the depressed keys of the overlay 310 also contact and depress various predefined input keys 216 on the keyboard of the device 210 located below the depressed Braille keys. In the Braille-input mode, the device 210 interprets the signals from the depressed input keys 216 and registers the corresponding aipba-numeric character on the device. Device 210 can interpret that the user has completed Braille character entry when the user presses a function key (*e.g*., ENTER key 324) or by ending a sampling period at a predetermined time after a signal from a first pressed input key is received (*e.g*., a key input time out used on most cellular telephones during text messaging).

The input keys 216 that will be located under and associated with the keys on the overlay 310 will have a predetermined positional relationship with each other. That is, there will be input keys 216 corresponding to the shape of the overlap sections 320, 322. For example, when the overlay 310 depicted in FIG. 3A is used with the device 210 (depicted in FIG. 1), input keys 320a-320f on overlay 3 10 may be designed to contact the "W," "E," "S," "D," "Z," and "X" input keys 216, respectively. In other words, even though the depression of the top-left Braille key in the alpha Braille keypad section 320 (corresponding to an "A" in Braille) results in the depression of an input key on the device 210 that is not normally an "A" key (in the example described above, the "W" key), the device 210 will interpret the depression as an "A" and registers an "A" instead of the "W".

The process of interpreting Braille keypad inputs and registering corresponding characters on the device 210 is a function of software or hardware settings in the device when the device is operating in Braille-input mode. Braille-input mode results in a remapping of the input keys 216 the keyboard of the device 210 to allow for Braille-input through overlay keypad sections 320, 322, The remapping may be performed using a key map look-up table or other linked list or database. Remapping may be implemented in software or by integrating an optional remapping circuit 238 into device 210, in which case the key map can be hardwired or downloaded to a memory in circuit 238. In this manner, device 210 can support users from multiple localities. Input processed by either the remapping hardware or software can be rendered visually on the display 214 or audibly through the internal speaker 228 or the external speaker 230.

FIG. depicts the process 500 described above. First, at step 510, one or more input keys 320a-320f in keypad section 320 on overlay 310 are depressed. Next, at step 515, the device 210 checks to see if it is in Braille-input mode. If not, the device interprets the keys as non-Braille characters (proceeding to step 545). If device 210 is in Braille-input mode, at step 520, the device 210 references the key map (hardware or software) and identifies the Braille character that has been entered. At step 530, according to the key map, the corresponding alpha-numetic character is identified and registered on the device 210, If desired, in an optional step 540, the device 210 can also be configured to output the identified character using an audible indication of the character using the internal speaker 228 or the external speaker 230. For example, if a user inputs a letter "A" in Braille-input mode, once the letter "A" is registered, the device can announce that the letter "A" has been pressed. This feature allows a user who cannot see the display to verify that the character identified by the device 210 is actually the character desired.

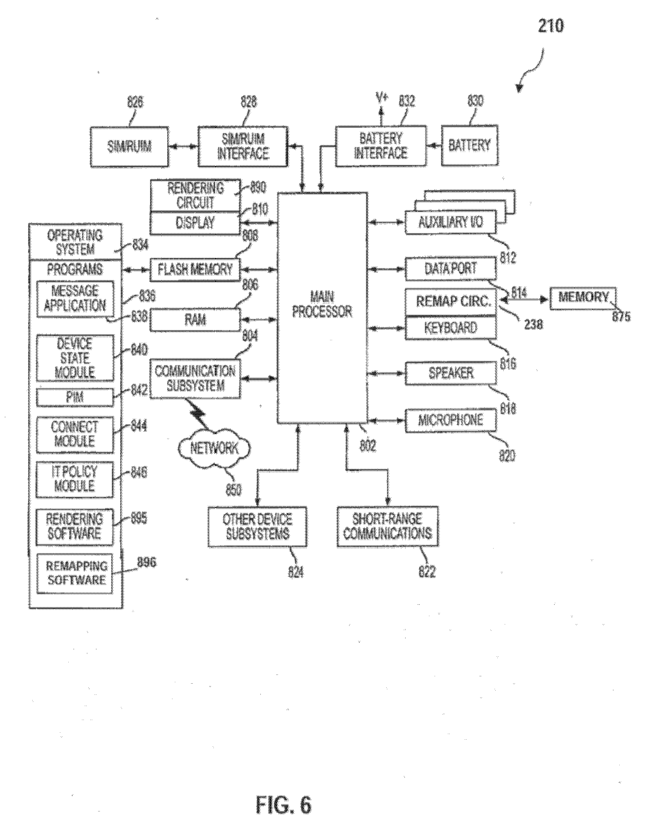

Referring now to FIG. 6, a block diagram of the internal components of the portable electronic device 210 is illustrated. The portable electronic device optionally includes a remapping circuit 238. As discussed above, remapping circuit 238 can have a memory 875 for storing a key map, or the key map can be optionally hardwired into remapping circuit 238. Remapping software 896 may also be installed on device 210 as part of programs 836 and used to control the remapping process described above. Alternatively, remapping can be controlled by remapping circuit 238. In addition to memory 875, the key map can also be stored in flash memory 808 for access by either of the remapping software 896 or the remapping circuit 238.

The portable electronic device 800 can also optionally include a rendering circuit 890 for rendering data files in either desktop display mode or mobile display mode, as described above. The rendering circuit 890 is responsive to rendering software 895 which instructs the rendering circuit to render large format data files as described above.

The portable electronic device 800 includes a number of other components such as a main processor 802 that controls the overall operation of the portable electronic device 800. Communication functions, including data and voice communications, are performed through a communication subsystem 804. The communication subsystem 804 receives messages from and sends messages to a wireless network 850. In this example embodiment of the portable electronic device 800, the communication subsystem 804 is configured in accordance with the Global System for Mobile Communication (GSM) and General Packet Radio Services (GPRS) standards. The GSM/GPRS wireless network is used worldwide and it is expected that these standards will he superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 804 with the wireless network 850 represents one or more different Radio Frequency (RF) channels, operating according to defined protocols specified for GSM/CPRS communications. With newer network protocols, these channels are capable of supporting both circuit switched voice communications and packet switched data communications.

Although the wireless network 850 associated with portable electronic device 800 is a GSM/GPRS wireless network in one example implementation, other wireless networks may also be associated with the portable electronic device 800 in valiant implementations. The different types of wireless networks that may be employed include, for example, data-centric wireless networks, voice-ccntric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric network include WiFi 802.11, Mobitex^{™} and DataTAC^{™} network communication systems. Examples of other voice-centric data networks include Personal Communication Systems (PCS) networks like GSM and Time Division Multiple Access (TDMA) systems.

The main processor 802 also interests with additional subsystems such as a Random Access Memory (RAM) 806, a flash memory 808, a display 810 which in this example includes the rendering circuit 890, an auxiliary input/output (I/O) subsystem 812, a data port 814, a keyboard 816, a speaker 818, a microphone 820, short-range communications 822 and other device subsystems 824. Rendering circuit 890 can alternatively be a separate subsystem that communicates with both the main processor 802 and the display 814.

Some of the subsystems of the portable electronic device 800 perform communication-related functions, whereas other subsystems may provide "resident" or on-device functions. By way of example, the display 810 and the keyboard 816 may be used for both communication-related functions, such as entering a text message for transmission over the network 850, and device-resident functions such as a calculator or task list.

The portable electronic device 800 can send and receive communication signals over the wireless network 850 after required network registration or activation procedures have been completed. Network access is associated with a subscriber or user of the portable electronic device 800. To identify a subscriber, the portable electronic device 800 requires a SIM/RUIM card 826 (i.e. Subscriber Identity Module or a Removable User Identity Module) to be inserted into a SIM/RUIM interface 828 in order to communicate with a network. The SIM card or RUIM 826 is one type of a conventional "smart card" that can be used to identify a subscriber of the portable electronic device 800 and to personalize the portable electronic device 800, among other things. Without the SIM card 826, the portable electronic device 800 is not fully operational for communication with the wireless network 850. By inserting the SIM card/RUIM 826 into the SIM/RUIM interface 828, a subscriber can access all subscribed services. Services may include: web browsing and messaging such as e-mail, voicemail, Short Message Service (SMS), and Multimedia Messaging Services (MMS). More advanced services may include: point of sale, field service and sales force automation. The SIM card/RUIM 826 includes a processor and memory for storing information. Once the SIM card/RUIM 826 is inserted into the SIM/RUIM interface 828, it is coupled to the main processor 802. In order to identify the subscriber, the SIM card/RUIM 826 can include some user parameters such as an International Mobile Subscriber Identity (IMSI). An advantage of using the SIM card/RUIM 826 is that a subscriber is not necessarily bound by any single physical mobile device. The SIM card/RUIM 826 may store additional subscriber information for a mobile device as well, including datebook (or calendar) information and recent call information. Alternatively, user identification information can also be programmed into the flash memory 808.

According to a preferred embodiment, the portable electronic device 800 is a battery-powered device and includes a battery interface 832 for receiving one or more rechargeable batteries 830. In at least some embodiments, the battery 830 can be a small battery with an embedded microprocessor. The battery interface 832 is coupled to a regulator (not shown), which assists the battery 830 in providing power V+ to the portable electronic device 800. Although current technology makes use of a battery, future technologies such as micro fuel cells may provide the power to the portable electronic device 800.

The portable electronic device 800 also includes an operating system 834 and software components 836 to 846, 895 which are described in more detail below. The operating system 834 and the software components 836 to 846, 895 that are executed by the main processor 802 are typically stored in a persistent storage such as the flash memory 808, which may alternatively be a read-only memory (ROM) or similar storage element (not shown). Those skilled in the art will appreciate that portions of the operating system 834 and the software components 836 to 846, 895 such as specific device applications, or parts thereof, may be temporarily loaded into a volatile store such as the RAM 806. Other software components can also be included, as is well known to those skilled in the art.

The subset of software applications 836 that control basic device operations, including data and voice communication applications, will normally be installed on the portable electronic device 800 during its manufacture. Other software applications include a message application 838 that can be any suitable software program that allows a user of the portable electronic device 800 to send and receive electronic messages. Various alternatives exist for the message application 838 as is well known to those skilled in the art. Messages that have been sent or received by the user are typically stored in the flash memory 808 of the portable electronic device 800 or some other suitable storage element in the portable electronic device 800. In at least some embodiments, some of the sent and received messages may be stored remotely from the portable electronic device 800 such as in a data store of an associated host system that the portable electronic device 800 communicates with.

The software applications can further include a device state module 840, a Personal Information Manager (PIM) 842, and other suitable modules (not shown). The device state module 840 provides persistence, i.e. the device state module 840 ensures that important device data is stored in persistent memory, such as the flash memory 808, so that the data is not lost when the portable electronic device 800 is turned off or loses power.

The PIM 842 includes functionality for organizing and managing data items of interest to the user, such as, but not limited to, e-mail, contacts, calendar events, voicemails, appointments, and task items. A PIM application has the ability to send and receive data items via the wireless network 850. PIM data items may be seamlessly integrated, synchronized, and updated via the wireless network 850 with the mobile device subscriber's corresponding data items stored and/or associated with a host computer system. This functionality creates a mirrored host computer on the portable electronic device 800 with respect to such items. This can be particularly advantageous when the host computer system is the mobile device subscriber's office computer system.

The portable electronic device 810 also includes a connect module 844, and an IT policy module 846. The connect module 844 implements the communication protocols that are required for the portable electronic device 800 to communicate with the wireless infrastructure and any host system, such as an enterprise system, that the portable electronic device 800 is authorized to interface with.

The connect module 544 includes a set of APIs that can be integrated with the portable electronic device 800 to allow the portable electronic device 800 to use any number of services associated with the enterprise system. The connect module 844 allows the portable electronic device 800 to establish an end-to-end secure, authenticated communication pipe with the host system. A subset of applications for which access is provided by the connect module 844 can be used to pass IT policy commands from the host system to the portable electronic device 800. This can be done in a wireless or wired manner. These instructions can then be passed to the IT policy module 846 to modify the configuration of the portable electronic device 800. Alternatively, in some cases, the IT policy update can also be done over a wired connection.

The IT policy module 846 receives IT policy data that encodes the IT policy. The IT policy module 846 then ensures that the IT policy data is authenticated by the portable electronic device 800. The IT policy data can then be stored in the flash memory 808 in its native form. After the IT policy data is stored, a global notification can be sent by the IT policy module 846 to all of the applications residing on the portable electronic device 800. Applications for which the IT policy may be applicable then respond by reading the IT policy data to look for IT policy rules that are applicable.

The IT policy module 846 can include a parser (not shown), which can be used by the applications to read the IT policy rules. In some cases, another module or application can provide the parser. Grouped IT policy rules, described in more detail below, are retrieved as byte streams, which are then sent (recursively, in a sense) into the parser to determine the values of each IT policy rule defined within the grouped IT policy rule. In at least some embodiments, the IT policy module 846 can determine which applications are affected by the IT policy data and send a notification to only those applications. In either of these cases, for applications that aren't running at the time of the notification, the applications can call the parser or the IT policy module 846 when they are executed to determine if there are any relevant IT policy rules in the newly received IT policy data.

All applications that support rules in the IT Policy are coded to know the type of data to expect. For example, the value that is set for the "WEP User Name" IT policy rule is known to be a string; therefore the value in the IT policy data that corresponds to this rule is interpreted as a string. As another example, the setting for the "Set Maximum Password Attempts" IT policy rule is known to be an integer, and therefore the value in the IT policy data that corresponds to this rule is interpreted as such.

After the IT policy rules have been applied to the applicable applications or configuration files, the IT policy module 846 sends an acknowledgement back to the host system to indicate that the IT policy data was received and successfully applied.

Other types of software applications can also be installed on the portable electronic device 800. These software applications can be third party applications, which are added after the manufacture of the portable electronic device 800. Examples of third party applications include games, calculators, utilities, etc.

The additional applications can be loaded onto the portable electronic device 800 through at least one of the wireless network 850, the auxiliary I/O subsystem 812, the data port 814, the short-range communications subsystem 822, or any other suitable device subsystem 824. This flexibility in application installation increases the functionality of the portable electronic device 800 and may provide enhanced on-device functions, communication-related functions, or both. For example, secure communication applications may enable electronic commerce functions and other such financial transactions to be performed using the portable electronic device 800.

The data port 814 enables a subscriber to set preferences through an external device or software application and extends the capabilities of the portable electronic device 800 by providing for information or software downloads to the portable electronic device 800 other than through a wireless communication network. The alternate download path may, for example, be used to load an encryption key onto the portable electronic device 800 through a direct and thus reliable and trusted connection to provide secure device communication.

The data port 814 can be any suitable port that enables data communication between the portable electronic device 800 and another computing device. The data port 814 can be a serial or a parallel port. In some instances, the data port 814 can be a USB port that includes data lines for data transfer and a supply line that can provide a charging current to charge the battery 830 of the portable electronic device 800.

The short-range communications subsystem 822 provides for communication between the portable electronic device 800 and different systems or devices, without the use of the wireless network 850. For example, the subsystem 822 may include an infrared device and associated circuits and components for short-range communication. Examples of short-range communication standards include standards developed by the Infrared Data Association (IrDA), Bluetooth, and the 802,11 family of standards developed by IEEE.

In use, a received signal such as a text message, an e-mail message, or web page download will be processed by the communication subsystem 804 and input to the main processor 802. The main processor 802 will then process the received signal for output to the display 810 via rendering circuit 890 or using rendering software 895. A subscriber may also compose data items, such as e-mail messages, for example, using the keyboard 816 in conjunction with the display 810 and possibly the auxiliary I/O subsystem 812. The auxiliary subsystem 812 may include devices such as: a tough screen, mouse, depressible trackball, infrared fingerprint detector, a depressible thumb or other buttons. The keyboard 816 is preferably an alphanumeric keyboard and/or telephone-type keypad. However, other types of keyboards may also be used. A composed item may be transmitted over the wireless network 850 through the communication subsystem 804.

For voice communications, the overall operation of the portable electronic device 800 is substantially similar, except that the received signals are output to the speaker 818, and signals for transmission are generated by the microphone 820. Alternative voice or audio I/O subsystems, such as a voice message recording subsystem, can also be implemented on the portable electronic device 800. Although voice or audio signal output is accomplished primarily through the speaker 818, the display 810 can also be used to provide additional information such as the identity of a calling party, duration of a voice call, or other voice call related information.

Although the embodiments and applications as described above relate to a portable electronic device with data or voice communication capacity, it should be understood that they may also be embodied in and applied with any portable electronic device. Additionally, although a trackball has been specifically used in the figures and description above, other embodiments of the invention exist wherein a trackball is by other high resolution cursor control devices, including but not limited to joysticks and touch pads, or wherein a capacitive touch screen is employed. Furthermore, as explained above, the functionalities of the described rendering and remapping circuits may be implemented as either hardware, software or a combination of both hardware and software.

Other examples, embodiments and applications related to the above description but not heretofore explained in detail are nevertheless considered pertinent and are to be considered within the scope of the following claims.

## Claims

1. A method (500) for Braille character input on a portable electronic device (210), the method comprising:
receiving a set of electronic signals from activated input keys (216) on a keyboard of the portable electronic device (520);
mapping the received signals to a corresponding Braille character based on positional relationships of the activated input keys (520); and
registering an alpha-numeric character corresponding to the mapped Braille character on the portable electronic device (530).

2. The method (500) of claim 1, further comprising the step of audibly announcing the alpha-numcric character (540).

3. The method (500) of claim 1, wherein the mapping step further comprises determining whether the corresponding Braille character is an alphabet or numeric/symbolic Braille character by identifying which of a plurality of sets of input keys on the keyboard have been activated (520, 320, 322),

4. The method (500) of claim 1, wherein the receiving step further comprises detecting that a particular input key (216) has been pressed before mapping the received signals to a corresponding Braille character (520).

5. The method (500) of claim 1, further comprising the step of waiting a predetermined time after receipt of a first electronic signal from an activated input key (216) before mapping the received signals to a corresponding Braille character (520).

6. The method (500) of claim 1, further comprising a step of determining whether the portable electronic device (210) is in a Braille-input mode before mapping the received signals to a corresponding Braille character (515).

7. An apparatus (310) for remapping an existing keyboard on a portable electronic device (210), the apparatus comprising:
an overlay (310) for the portable electronic device (210), the overlay including at least two Braille keypad sections (320, 322) configured to be located above input keys (216) on the existing keyboard of the device such that when a key in the Braille keypad sections (320a-f, 322a-f) is pressed, the pressed key (320a-f, 322a-f)contacts and presses one or more input keys (216) located below the pressed Braille key (320a-f, 322a-f).

8. The apparatus (310) of claim 7, wherein one of the at least two Braille keypad sections (320, 322) is for alphabet character input (320), and another of the at least two Braille keypad sections is for numeric or symbolic character input (322).

9. The apparatus (310) of claim 7, wherein the overlay includes at least one function key (324, 326, 328, or 330) configured to be located above one or more input keys (216) on the existing keyboard of the device (210) such that when the function key is pressed, the pressed function key (324, 326, 328, or 330) contacts and presses the one or more input keys (216) located below the pressed function key (324, 326, 328, or 330), and the portable electronic device (210) is adapted to interpret a signal from the one or more pressed input keys (216) to activate a predetermined function on the device.

10. The apparatus (310) of claim 7, wherein the Braille keypad sections are configured to march a configuration of a SureType® keyboard.

11. A system (310, 500) for remapping an existing keyboard on a portable electronic device (210), the system comprising:
an overlay (310) for the portable electronic device (210), the overlay including at least two Braille keypad sections (320, 322) configured to be located above input keys (216) on the existing keyboard of the device such that when a key in the Braille keypad sections (320a-f, 322a-f) is pressed, the pressed key (320a-f, 322a-f) contacts and presses one or more input keys (216) located below the pressed Braille key (320a-f, 322a-f); and
remapping means (238, 896) operable on the portable electronic device (210) for receiving signals from a set of pressed input keys (520), mapping the received signals to a Braille character (520), and registering a corresponding alpha-numeric character to the mapped Braille character (530).

12. The system (310, 500) of claim 11, wherein the remapping means (238, 896) comprises a key map for identifying the Braille character that corresponds to the set of pressed input keys (216).

13. The system (310, 500) of claim 11, wherein the remapping means comprises a remapping circuit (238) connected between the keyboard (816) and a processor (802) of the portable electronic device (210).

14. The system (310, 500) of claim 11, wherein the remapping circuit includes a memory for storing a key map (806, 875) and a processor (802) for comparing received set of signals to the key map to identify the corresponding Braille character (520).

15. The system (310, 500) of claim 11, wherein the remapping means is further adapted to audibly announce the alpba-numetic character using a speaker of the portable electronic device (540).

## Amended claims

### Amended claims in accordance with Rule 137(2) EPC.

**1.** A method (500) for Braille character input on a portable electronic device (210), the method comprising:
receiving a set of electronic signals from at least one activated input key (216) belonging to one of a plurality of sets of input keys on a keyboard of the portable electronic device (520);
mapping the received signals to a corresponding Braille character based on positional relationships of the activated input keys (520);
determining whether the corresponding Braille character is an alphabetic or numeric/symbolic Braille character by identifying which of a plurality of sets of input keys on the keyboard have been activated (520, 320, 322); and
registering an alpha-numeric character corresponding to the mapped Braille character on the portable electronic device (530).

**2.** The method (500) of claim 1, further comprising the step of audibly announcing the alpha-numeric character (540).

**3.** The method (500) of claim 1, wherein the receiving step further comprises detecting that a particular input key (216) has been pressed before mapping the received signals to a corresponding Braille character (520).

**4.** The method (500) of claim 1, further comprising the step of waiting a predetermined time after receipt of a first electronic signal from an activated input key (216) before mapping the received signals to a corresponding Braille character (520).

**5.** The method (500) of claim 1, further comprising a step of determining whether the portable electronic device (210) is in a Braille-input mode before mapping the received signals to a corresponding Braille character (515).

**6.** An apparatus (310) for remapping an existing keyboard on a portable electronic device (210), the apparatus comprising:
an overlay (310) for the portable electronic device (210), the overlay including at least two Braille keypad sections (320, 322) configured to be located above input keys (216) on the existing keyboard of the device such that when a key in the Braille keypad sections (320a-f, 322a-f) is pressed, the pressed key (320a-f, 322a-f)contacts and presses one or more input keys (216) located below the pressed Braille key (320a-f, 322a-f).

**7.** The apparatus (310) of claim 6, wherein one of the at least two Braille keypad sections (320, 322) is for alphabet character input (320), and another of the at least two Braille keypad sections is for numeric or symbolic character input (322).

**8.** The apparatus (310) of claim 6, wherein the overlay includes at least one function key (324, 326, 328, or 330) configured to be located above one or more input keys (216) on the existing keyboard of the device (210) such that when the function key is pressed, the pressed function key (324, 326, 328, or 330) contacts and presses the one or more input keys (216) located below the pressed function key (324, 326, 328, or 330), and the portable electronic device (210) is adapted to interpret a signal from the one or more pressed input keys (216) to activate a predetermined function on the device.

**9.** The apparatus (310) of claim 6, wherein the Braille keypad sections are configured to match a configuration of a SureType® keyboard.

**10.** A system (310, 500) for remapping an existing keyboard on a portable electronic device (210), the system comprising:
an overlay (310) for the portable electronic device (210), the overlay including at least two Braille keypad sections (320, 322) configured to be located above input keys (216) on the existing keyboard of the device such that when a key in the Braille keypad sections (320a-f, 322a-f) is pressed, the pressed key (320a-f, 322a-f) contacts and presses one or more input keys (216) located below the pressed Braille key (320a-f, 322a-f); and
remapping means (238, 896) operable on the portable electronic device (210) for receiving signals from a set of pressed input keys (520), mapping the received signals to a Braille character (520), and registering a corresponding alpha-numeric character to the mapped Braille character (530).

**11.** The system (310, 500) of claim 10, wherein the remapping means (238, 896) comprises a key map for identifying the Braille character that corresponds to the set of pressed input keys (216).

**12.** The system (310, 500) of claim 10, wherein the remapping means comprises a remapping circuit (238) connected between the keyboard (816) and a processor (802) of the portable electronic device (210).

**13.** The system (310, 500) of claim 10, wherein the remapping circuit includes a memory for storing a key map (806, 875) and a processor (802) for comparing received set of signals to the key map to identify the corresponding Braille character (520).

**14.** The system (310, 500) of claim 10, wherein the remapping means is further adapted to audibly announce the alpha-numeric character using a speaker of the portable electronic device (540).
